# EUROPÄISCHE PATENTANMELDUNG

(11) **EP 1 905 405 A2**
(43) Veröffentlichungstag der Anmeldung: **02.04.2008**
(21) Anmeldenummer: 07117524.4
(22) Anmeldetag: 28.09.2007
(51) Int. Cl.: A61G 7/07, A61G 13/12

(54) **Stützenteil auf Schaumstoffbasis, sowie Verfahren zum Herstellen eines solchen Stützenteils**

(30) Priorität: 29.09.2006 DE 102006046537
(71) Anmelder: LEIDEL & KRACHT, D-50735 Köln (DE)
(72) Erfinder: Hirsch, Kai, 50737, Köln (DE)
(74) Vertreter: Müller, Enno

(57) **Zusammenfassung**

Die Erfindung betrifft ein Stützenteil (1) auf Schaumstoffbasis zur Verwendung im medizinischen Bereich, wie beispielsweise in Operationssälen, insbesondere eine I<opfstütze, wobei das Stützenteil (1) einen Hartschaumstoffkern (2) aufweist, welcher überzogen ist von einer Weichschaumstoffschicht (4), sowie weiter ein Verfahren zum Herstellen eines solchen Stützenteils. Um ein Stützenteil der in Rede stehenden Art hinsichtlich Funktionalität und Gebrauch weiter zu verbessern, ist vorgesehen, dass weiter die Weichschaumstoffschicht (4) von einer Außenhülle (6) umgeben ist. Verfahrensmäßig ist vorgesehen, dass zumindest eine Stützenteil-Außenhülle (6) in einer Tiefziehform mit einer Weichschaumstoffschicht (4) kaschiert und vorgeformt wird und dieser Verbund hiernach über den Hartschaumstoffkern (2) gezogen wird.

## Beschreibung

Die Erfindung betrifft zunächst eine Stützenteil auf Schaumstoffbasis zur Verwendung im medizinischen Bereich, wie beispielsweise in Operationssälen, insbesondere eine Kopfstütze, wobei der Stützenteil einen Hartschaumstoffkern aufweist, welcher überzogen ist von einer weichen Schaumstoffschicht.

Stützenteile, insbesondere Kopfstützen der in Rede stehenden Art sind bekannt. Diese finden insbesondere Anwendung im medizinischen Bereich, weiter in Operationssälen, zur Fixierung des Kopfes oder eines sonstigen Körperteils in einer gewählten Position. Bekannte Ausführungsformen bestehen zur stabilen Lagerung des Körperteils aus einem Hartschaumstoffkern, der weiter bevorzugt mit einer Weichschaumstoffschicht überzogen ist.

Im Hinblick auf den zuvor beschriebenen Stand der Technik wird eine technische Problematik der Erfindung darin gesehen, ein Stützenteil der in Rede stehenden Art hinsichtlich Funktionalität und Gebrauch weiter zu verbessern.

Diese Problematik ist zunächst und im Wesentlichen durch den Gegenstand des Anspruchs 1 gelöst, wobei darauf abgestellt ist, dass weiter die Weichschaumstoffschicht von einer Außenhülle umgeben ist. Zufolge dieser Ausgestaltung ist durch die Anordnung der Außenhülle ein Schutzüberzug insbesondere für die empfindliche Weichschaumstoffschicht gegeben. Qualitätsstandards, wie Anmutung, ggf. flüssigkeitsdichte Ausgestaltung, höhere Schnittfestigkeit oder auch Vermeidung von Farbveränderungen, können so leichter eingehalten werden.

Im Weiteren sind Merkmale beschrieben, die bevorzugt in Kombination mit den Merkmalen des Anspruchs 1 Bedeutung haben, aber grundsätzlich auch mit nur einigen Merkmalen des Anspruches 1 oder allein Bedeutung haben können.

So ist in einer vorteilhaften Weiterbildung des Erfindungsgegenstandes vorgesehen, dass die Außenhülle auf die Weichschaumstoffschicht aufkaschiert ist. So ist keine Relativverschiebung der Lagen (Außenhülle und Weichschaumstoffschicht) möglich. Die Außenhülle nimmt die Form der darunter angeordneten ankaschierten Weichschaumstoffschicht auf, so dass deren Kontur sich außenseitig auf der Außenhülle reflektiert. Zudem ist durch die Aufkaschierung eine vollflächige Kontaktierung der Außenhülle mit der Weichschaumstoffschicht gesichert. Unkontrolliert eingeschlossene Luftpolster, wie sie sich beispielsweise beim üblichen Überziehen von Außenhüllen einstellen können, werden sicher vermieden. Die Kaschierung erfolgt unter Wärmebeeinflussung der beiden Schichten, womit sich eine Verbindung einstellt, die nach dem Erkalten untrennbar ist, zumindest nicht zerstörungsfrei trennbar, ist.

Das Stützenteil ist weiterhin dadurch stabilisiert, dass auch die mit der Weichschaumschicht kaschierte Außenhülle auf den Hartschaumstoffkern aufgezogen und mit diesem kaschiert ist. Der Hartschaumstoffkern ist hierbei im Wesentlichen formgebend für die Kopfstütze. Durch Aufkaschierung der nachfolgenden Schichten ergibt sich eine vollflächige Anpassung von Außenhülle und Weichschaumstoffkern gemäß der Profilierung des Kernes. Auch diese kaschierte Verbindung ist nicht, oder zumindest nicht zerstörungsfrei, trennbar.

Die Außenhülle kann beispielsweise aus einem Kunststoffmaterial bestehen; kann entsprechend kunststofffolienartig ausgebildet sein. Bevorzugt wird diesbezüglich eine Ausgestaltung, bei welcher die Außenhülle aus Kunstleder besteht. Als Kunstleder wird ein Verbund von textilem Gewebe mit einer Kunststoffbeschichtung verstanden. Hierbei handelt es sich um Naturfasergewebe oder Kunstfasern, die mit einer weichen Polyurethan-Schicht beschichtet sind. Diese Beschichtung kann auch geschäumt ausgeführt sein. Auch kann diese zur Einstellung einer elektrischen Leitfähigkeit, beispielsweise mit Ruß versehen sein. In der Regel ist die Oberfläche von sog. Kunstleder genarbt, so dass diese einer Lederstruktur entspricht. Eine solche Kunstlederschicht kann darüber hinaus zur wasserdichten Ausgestaltung des Stützenteils beitragen.

Die Weichschaumstoffschicht besteht bevorzugt aus einem thermoplastischen Kunststoffmaterial, weiter bevorzugt aus Polyethylen. Gegebenenfalls in der Außenhülle vorgesehene Nähte werden erreicht durch eine randseitige Komprimierung und thermoplastische Verformung.

Der Hartschaumstoffkern besteht bevorzugt aus einem expandierten thermoplastischen Kunststoffmaterial, so insbesondere aus expandiertem Polyethylen. Alternativ ist auch ein vorgeschäumter Polyurethan-Kern denkbar.

Zufolge dieser Ausgestaltung ist ein Stützenteil erhöhten Gebrauchs- und Funktionalitätswerts geschaffen. Kunstleder erweist sich diesbezüglich als vorteilhaftes Material zur Ausgestaltung der Außenhülle, da dieses eine erhöhte Schnittfestigkeit bietet, so dass Beschädigungen, die weiter bspw. zu Schmutztaschen führen können, vermieden werden. Weiter ist durch die auch geschaffene flüssigkeitsdichte Ausgestaltung die Säuberung eines so geschaffenen kissenartigen Teile, eines Stützenteils, beispielsweise durch Abwaschen der Außenhülle, wesentlich erleichtert; dies hin bis zu einer Reinigung mit Desinfektionsmitteln.

Die Erfindung betrifft des Weiteren ein Verfahren zum Herstellen eines Stützenteils auf Schaumstoffbasis zur Verwendung im medizinischen Bereich wie beispielsweise in Operationssälen, wobei das Stützenteil, insbesondere die Kopfstütze einen Hartschaumstoffkern aufweist.

Stützenteile der in Rede stehenden Art sind, wie eingangs beschrieben, bekannt.

Um ein Verfahren der in Rede stehenden Art im Hinblick auf die Herstellung eines funktional und gebrauchstechnisch verbesserten Stützenteils in vorteilhafter Weise weiterzubilden, wird vorgeschlagen, dass zunächst eine Stützenteil-Außenhülle in einer Tiefziehform mit einer Weichschaumstoffschicht kaschiert und vorgeformt wird und dieser Verbund hiernach über den Hartschaumstoffkern gezogen wird. Durch die Aufkaschierung der Weichschaumstoffschicht auf die Innenseite der Außenhülle wird ein Verbund erzielt. Außenhülle und Weichschaumstoffschicht sind hiernach untrennbar, zumindest nicht ohne Zerstörung trennbar miteinander fest verbunden, so dass sich die Profilierung der Weichschaumstoffschicht außenseitig auf der Außenhülle wiederspiegelt. Diese Profilierung entspricht weiter der Profilierung des von dem Verbund überzogenen Hartschaumstoffkerns. Die Außenhülle wird hierzu zunächst in einer Tiefziehform, insbesondere unterdruckbeaufschlagt gehalten und in dieser Stellung mit der weichen Schaumstoffschicht kaschiert. Es ergibt sich so ein formstabiler, wenn auch weicher Grundkörper-Verbund. Dieser wird hiernach auf den gesondert hergestellten Hartschaumstoffkern aufgezogen.

Im Weiteren sind Merkmale beschrieben, die bevorzugt in Kombination mit den Merkmalen des Anspruchs 9 Bedeutung haben, aber grundsätzlich auch mit nur einigen Merkmalen des Anspruchs 9 oder alleine Bedeutung haben können.

So ist weiter vorgesehen, dass der mit dem Verbund überzogene Hartschaumstoffkern in einer Form liegend wärmebeaufschlagt wird zur Kaschierung der Schaumstoffseite des Verbundes mit dem Hartschaumstoffkern. Es ergibt sich daraus eine weitere vollflächige KaschierVerbindung, so dass das aus drei übereinander liegenden Schichten bestehende Stützenteil (Hartschaumstoffkern, Weichschaumstoffschicht und Außenhülle) durch Kaschierung der einzelnen Lagen untereinander sich in Art eines einteiligen Stützenteils formstabil verhält. Es ergeben sich keine Verschiebungen der Lagen untereinander durch von außen einwirkende Kräfte. Weiter wird durch die jeweilige vollflächige Kaschierung der Einschluss von nicht gewünschten Luftpolstern vermieden. Eine besonders gute Kaschierverbindung zwischen den Schaumstoffschichten, d.h. zwischen der Oberfläche des Hartschaumstoffkerns und der zugewandten Innenseite der Weichschaumstoffschicht, wird bei einer Wärmeeinwirkung von 130° bis 200° C, bevorzugt 160° C erreicht.

Die Außenhülle kann beispielsweise aus einem Kunststoffmaterial bestehen; kann entsprechend kunststofffolienartig ausgebildet sein. Bevorzugt wird diesbezüglich eine Ausgestaltung, bei welcher die Außenhülle aus Kunstleder besteht. Als Kunstleder wird ein Verbund von textilem Gewebe mit einer Kunststoffbeschichtung verstanden. Hierbei handelt es sich um Naturfasergewebe oder Kunstfasern, die mit einer weichen Polyurethan-Schicht beschichtet sind. Diese Beschichtung ist im vorliegenden Fall bevorzugt geschäumt ausgeführt und kann zur Einstellung einer elektrischen Leitfähigkeit beispielsweise mit Ruß versehen sein. In der Regel ist die Oberfläche von sog. Kunstleder genarbt, so dass diese einer Lederstruktur entspricht. Eine solche Kunstlederschicht kann darüber hinaus zur wasserdichten Ausgestaltung der Kopfstütze beitragen.

Die Weichschaumstoffschicht besteht bevorzugt aus einem thermoplastischen Kunststoffmaterial, weiter bevorzugt aus Polyethylen. Gegebenenfalls in der Außenhülle vorgesehene Nähte werden erreicht durch eine randseitige Komprimierung und thermoplastische Verformung.

Der Hartschaumstoffkern besteht bevorzugt aus einem expandierten thermoplastischen Kunststoffmaterial, so insbesondere aus expandiertem Polyethylen.

Weiter ist nachstehend die Erfindung anhand der beigefügten Zeichnung, welche lediglich ein Ausführungsbeispiel darstellt, näher erläutert. Es zeigt:
Fig. 1 ein erfindungsgemäßes Stützenteil in Draufsicht;
Fig. 2 den Schnitt gemäß der Linie II - II in Fig. 1;

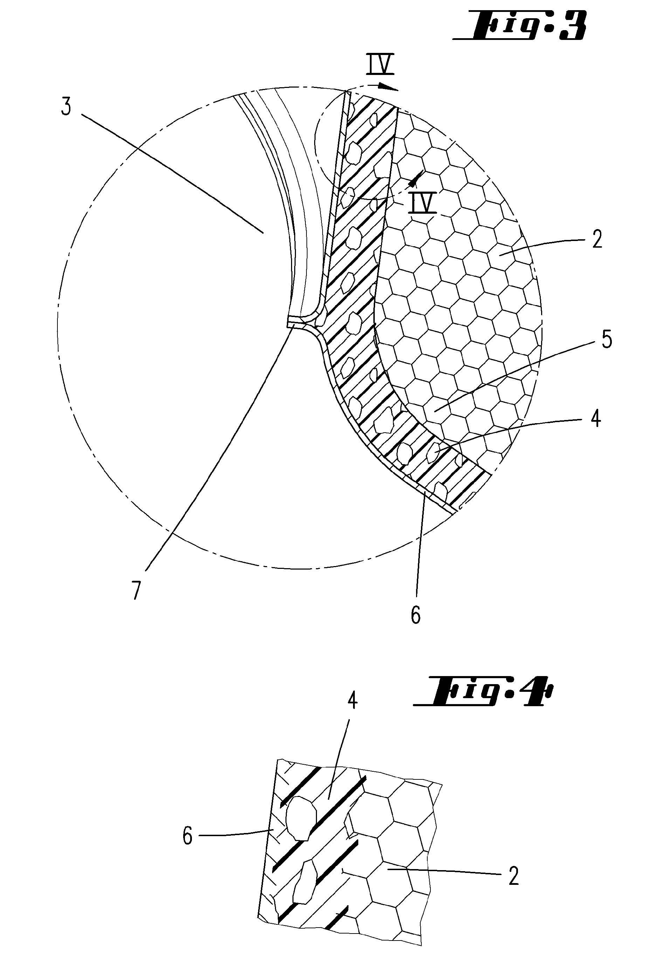

Fig. 3 die Heraus-Vergrößerung des Bereiches III in Fig. 2;
Fig. 4 die weitere Heraus-Vergrößerung des Bereiches IV in Fig. 3.

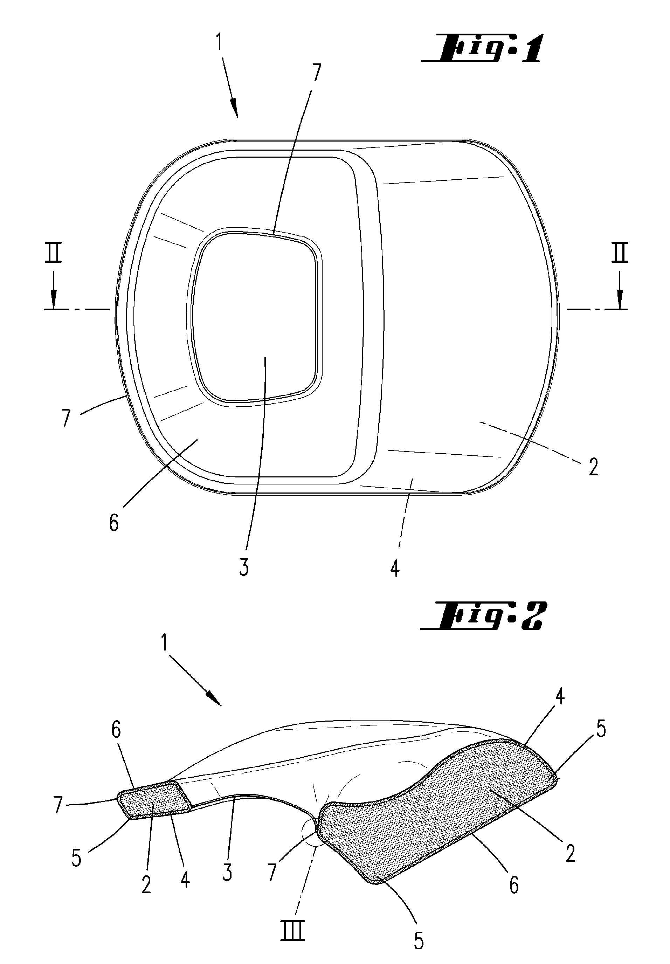

Dargestellt und beschrieben ist zunächst mit Bezug zu Fig. 1 eine Kopfstütze 1 zur Verwendung im medizinischen Bereich. Abweichend hierzu könnte es sich beispielsweise auch um eine Fuß- oder Armstütze handeln.

Diese Kopfstütze 1 besteht zunächst aus einem Hartschaumstoffkern 2 auf Basis eines expandierten thermoplastischen Kunststoffmaterials, so insbesondere expandiertem Polyethylens. Dieser Hartschaumstoffkern 2 weist in einem Grundriss gemäß der Darstellung in Fig. 1 ein materialumschlossenes Fenster 3 auf. Demzufolge ist der Kern in etwa ringförmig gestaltet.

In Abhängigkeit von der gewünschten Oberflächenprofilierung ist der Hartschaumstoffkern 2 über die flächige Erstreckung betrachtet mit unterschiedlichen Höhen versehen. Es ergibt sich eine berg- und talartige Oberflächenprofilierung des Kerns 2.

Der Hartschaumstoffkern 2 ist vollflächig, d.h. auch zugewandt dem Fensterrand, überzogen von einer Weichschaumstoffschicht 4, bevorzugt bestehend aus Polyethylen. Beträgt die Stärke des Hartschaumstoffkerns 2 zwischen 10 und 150 mm, je nach Profilierung, so ist die Weichschaumstoffschicht 4 mit einer im Wesentlichen durchgängig gleichbleibenden Stärke von etwa 3-8 mm versehen, dies gemessen am fertigen Produkt.

Die sich ergebenden Randkanten 5 des Hartschaumstoffkerns 2 sind verrundet. Die übergezogene Weichschaumstoffschicht 4 nimmt die Rundung auf.

Der so allseitig von der Weichschaumstoffschicht 4 umschlossene Hartschaumstoffkern 2 ist darüber hinaus mit einer Außenhülle 6 versehen. Diese ist vollflächig der dem Hartschaumstoffkern 2 abgewandten Oberfläche der Weichschaumstoffschicht 4 zugeordnet vorgesehen, so dass die Außenhülle 6 den Hartschaumstoffkern 2 und die Weichschaumstoffschicht 4 vollständig umgibt, dies weiter bei Projizierung der Hartschaumstoffkern-Kontur zur Außenseite hin.

Die Materialstärke der Außenhülle beträgt etwa 0,5 -1,5 mm. Diesbezüglich wird für die Außenhülle 6 ein Kunstleder bevorzugt, entsprechend also ein Verbund aus textilem Gewebe und einer weichen Polyurethan-Schicht, welche weiter bevorzugt geschäumt ausgeführt ist.

Die einzelnen Lagen (Hartschaumstoffkern 2 - Weichschaumstoffschicht 4 - Außenhülle 6) sind übereinanderliegend miteinander kaschiert (vergleiche Fig. 4). Zufolge dieser Kaschierung sind die Lagen unverrückbar miteinander verbunden. Weiter wird durch die vollflächige Kaschierung dem Einschluss von ungewollten Luftpolstern oder dergleichen entgegengewirkt. Die durch den Hartschaumstoffkern 2 vorgegebene Kissenkontur spiegelt sich auf der Außenseite der Außenhülle 6 wider.

Durch entsprechende Ausrüstung der Außenhülle 6, bspw. durch Einmischen von Rußpartikeln in die Polyurethan-Schicht kann die Außenhülle 6 zudem noch elektrisch leitend eingestellt sein. Dies weiter zur Ableitung elektrischer Ladungen. Darüber hinaus ist die Außenhülle 6 wasserdicht eingestellt und somit auch bei etwaigen Verschmutzungen feucht abwischbar bzw. mit einem Desinfektionsmittel reinigbar.

Die Kunstleder-Außenhülle 6 wird zur innenseitigen Kaschierung mit der Weichschaumstoffschicht 4 in einer Tiefziehform durch Unterdruck gehalten. Diese ist der Hüllenaußenseite der Form zugewandt. Unter Wärmeeinwirkung wird die Weichschaumstoffschicht 4 auf die Hülleninnenseite aufkaschiert. Hieraus ergibt sich ein formstabiler, wenn auch weicher Verbund.

Dieser Verbund wird über den gesondert hergestellten Hartschaumstoffkern 2 gezogen, wobei etwaige Nähte 7 durch thermoplastische Verformung der Randbereich der Außenhülle 6 gebildet sind, dies weiter unter gleichzeitiger Fassung der entsprechenden Randabschnitte der Weichschaumstoffschicht 4.

Der mit dem Verbund überzogene Hartschaumstoffkern 2 wird abschließend in einer Form liegend wärmebeaufschlagt, zur vollflächigen Kaschierung der der Außenhülle 6 abgewandten Innenseite der Weichschaumstoffschicht 4 mit der Hartschaumstoffkern-Oberfläche. Diese Kaschierung erfolgt bevorzugt bei 160°C.

Die Kaschierungen erfolgen alle vollflächig, allseitig umschließend.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Stützenteil (1) auf Schaumstoffbasis zur Verwendung im medizinischen Bereich, wie beispielsweise in Operationssälen, insbesondere Kopfstütze, wobei das Stützenteil (1) einen Hartschaumstoffkern (2) aufweist, welcher überzogen ist von einer Weichschaumstoffschicht (4), **dadurch gekennzeichnet, dass** weiter die Weichschaumstoffschicht (4) von einer Außenhülle (6) umgeben ist.

2. Stützenteil nach Anspruch 1, oder insbesondere danach, **dadurch gekennzeichnet, dass** die Außenhülle (6) auf die Weichschaumstoffschicht (4) aufkaschiert ist.

3. Stützenteil nach einem oder mehreren der vorhergehenden Ansprüche oder insbesondere danach, **dadurch gekennzeichnet, dass** die mit der Weichschaumstoffschicht (4) kaschierte Außenhülle (6) auf den Hartschaumstoffkern (2) aufgezogen und mit diesem kaschiert ist.

4. Stützenteil nach einem oder mehreren der vorhergehenden Ansprüche oder insbesondere danach, **dadurch gekennzeichnet, dass** die Außenhülle (6) aus Kunstleder besteht.

5. Stützenteil nach einem oder mehreren der vorhergehenden Ansprüche oder insbesondere danach, **dadurch gekennzeichnet, dass** die Weichschaumstoffschicht (4) aus einem thermoplastischen Kunststoffmaterial besteht.

6. Stützenteil nach einem oder mehreren der vorhergehenden Ansprüche oder insbesondere danach, **dadurch gekennzeichnet, dass** die Weichschaumstoffschicht (4) aus Polyethylen besteht.

7. Stützenteil nach einem oder mehreren der vorhergehenden Ansprüche oder insbesondere danach, **dadurch gekennzeichnet, dass** der Hartschaumstoffkern (2) aus einem expandierten thermoplastischen Kunststoffmaterial besteht.

8. Stützenteil nach einem oder mehreren der vorhergehenden Ansprüche oder insbesondere danach, **dadurch gekennzeichnet, dass** der Hartschaumstoffkern (2) aus expandiertem Polyethylen besteht.

9. Verfahren zum Herstellen eines Stützenteils (1) auf Schaumstoffbasis zur Verwendung im medizinischen Bereich, wie beispielsweise in Operationssälen, insbesondere Kopfstütze, wobei die Stützenteil einen Hartschaumstoffkern (2) aufweist, **dadurch gekennzeichnet, dass** zunächst eine Stützenteil-Außenhülle (6) in einer Tiefziehform mit einer Weichschaumstoffschicht (4) kaschiert und vorgeformt wird und dieser Verbund hiernach über den Hartschaumstoffkern (2) gezogen wird.

10. Verfahren nach Anspruch 9 oder insbesondere danach, **dadurch gekennzeichnet, dass** der mit dem Verbund überzogene Hartschaumstoffkern (2) in einer Form liegend wärmebeaufschlagt wird, zur Kaschierung der Schaumstoffseite des Verbundes mit dem Hartschaumstoffkern (2).

11. Verfahren nach einem oder mehreren der Ansprüche 9 bis 10 oder insbesondere danach, **dadurch gekennzeichnet, dass** die Kaschierung bei einer Wärmeeinwirkung von 130° bis 200° C, bevorzugt 160° C erfolgt.

12. Verfahren nach einem oder mehreren der Ansprüche 9 bis 11 oder insbesondere danach, **dadurch gekennzeichnet, dass** die Außenhülle (6) aus Kunstleder besteht.

13. Verfahren nach einem oder mehreren der Ansprüche 9 bis 12 oder insbesondere danach, **dadurch gekennzeichnet, dass** die Weichschaumstoffschicht (4) aus einem thermoplastischen Kunststoffmaterial besteht.

14. Verfahren nach einem oder mehreren der Ansprüche 9 bis 13 oder insbesondere danach, **dadurch gekennzeichnet, dass** die Weichschaumstoffschicht (4) aus Polyethylen besteht.

15. Verfahren nach einem oder mehreren der Ansprüche 9 bis 14 oder insbesondere danach, **dadurch gekennzeichnet, dass** der Hartschaumstoffkern (2) aus einem expandierten thermoplastischen Kunststoffmaterial besteht.

16. Verfahren nach einem oder mehreren der Ansprüche 9 bis 15 oder insbesondere danach, **dadurch gekennzeichnet, dass** der Hartschaumstoffkern (2) aus expandiertem Polyethylen besteht.
